(19) Europäisches Patentamt
European Patent Office
Office européen des brevets

(11) Veröffentlichungsnummer: **0 068 256**
**B1**

(12) # EUROPÄISCHE PATENTSCHRIFT

(45) Veröffentlichungstag der Patentschrift: **21.11.84**

(51) Int. Cl.³: **C 08 F 10/00**, C 08 F 4/64

(21) Anmeldenummer: **82105164.6**

(22) Anmeldetag: **14.06.82**

(54) **Verfahren zur Herstellung eines Polyolefins und Katalysator hierfür.**

(30) Priorität: **20.06.81 DE 3124222**

(43) Veröffentlichungstag der Anmeldung: **05.01.83 Patentblatt 83/1**

(45) Bekanntmachung des Hinweises auf die Patenterteilung: **21.11.84 Patentblatt 84/47**

(84) Benannte Vertragsstaaten: **BE DE FR GB IT NL**

(56) Entgegenhaltungen: **EP-A-0 002 221 DE-A-2 000 566**

(73) Patentinhaber: **HOECHST AKTIENGESELLSCHAFT, Postfach 80 03 20, D-6230 Frankfurt am Main 80 (DE)**

(72) Erfinder: **Berthold, Joachim, Dr., Talblick 3, D-6239 Eppstein/Taunus (DE)**
Erfinder: **Diedrich, Bernd, Dr., Ulmenweg 10, D-6236 Eschborn (DE)**
Erfinder: **Franke, Rainer, Dr., Ginsterweg 18A, D-6272 Niedernhausen/Taunus (DE)**
Erfinder: **Hartlapp, Jürgen, Leonhardstrasse 5A, D-6234 Hattersheim am Main (DE)**
Erfinder: **Schäfer, Werner, Dr., Rosenstrasse 10, D-6238 Hofheim am Taunus (DE)**
Erfinder: **Strobel, Wolfgang, Dr., Ubierstrasse 39, D-6238 Hofheim am Taunus (DE)**

EP 0 068 256 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Bekannt sind Verfahren zur Herstellung von Polyolefinen mittels Katalysatoren, die durch Umsetzung von Magnesiumalkoholaten und/ oder komplexen Magnesiumalkoholaten mit Übergangsmetallhalogeniden gebildet werden (DE-AS 1 795 197, DE-AS 1 957 679, DE-OS 2 000 566).

In einem Fall wird für die Umsetzung der Magnesiumverbindung und der chlorhaltigen Titanverbindung ein Temperaturbereich von 0 bis 200° C empfohlen, jedoch soll die obere Temperaturgrenze dabei so gewählt werden, daß keine Zersetzungsprodukte gebildet werden. Als Vorteil wird neben der hohen Aktivität der Polymerisationskatalysatoren besonders auf die Möglichkeit zur Darstellung von Ethylen-Homopolymerisaten und Ethylen-$\alpha$-Olefin-Copolymerisaten mit enger Molekulargewichtsverteilung hingewiesen (DE-AS 1 795 197, DE-AS 1 957 679).

Im anderen Fall erfolgt die Umsetzung des Metallalkoholats mit der Übergangsmetallverbindung in Gegenwart oder Abwesenheit eines inerten Verdünnungsmittels bei Temperaturen von 40 bis 210° C; die Reaktionsdauer der Umsetzung liegt im allgemeinen zwischen 5 und 240 Minuten (DE-OS 2 000 566). Vor einer längeren Reaktionsdauer wird ausdrücklich gewarnt, da sie eine Verschlechterung der Eigenschaften des Katalysators bewirke. Auch in dieser Druckschrift wird als Vorteil der Katalysatoren die hohe Aktivität und die Möglichkeit zur Herstellung von Polyolefinen mit enger Molekulargewichtsverteilung genannt. Gleichzeitig wird ein Katalysator beschrieben, der durch Umsetzung von Magnesiumethylat mit Vanadintetrachlorid erhalten wird und ein Polyethylen mit breiter Molekulargewichtsverteilung ergibt. Vanadiumverbindungen haben jedoch den großen Nachteil, daß sie im Gegensatz zu Titanverbindungen außerordentlich giftig sind. Die Vanadiumverbindungen enthaltenden Produkte sind daher nur begrenzt einsatzfähig. Bei technischen Polymerisationsverfahren ergeben sich daher bei dem Einsatz von Vanadiumverbindungen außerdem hohe Kosten bei der Aufarbeitung der Kontaktmutterlaugen.

Es bestand somit die Aufgabe, Polymerisationskatalysatoren auf Basis eines Magnesiumalkoholats zu finden, mittels derer man Polyolefine mit breiter Molekulargewichtsverteilung in hoher Ausbeute herstellen kann.

Es wurde nun gefunden, daß man auch mit einem katalytischen Feststoff auf Basis eines Magnesiumsalkoholats und einer vierwertigen Titanverbindung Polyolefine mit breiter Molekulargewichtsverteilung und sehr hoher Ausbeute erhalten kann, wenn man das in Kohlenwasserstoffen unlösliche Umsetzungsprodukt des Magnesiumalkoholats mit Titantetrachlorid mit einem Chloralkoxytitanat bei erhöhter Temperatur unter Abspaltung von Alkylchloriden thermisch behandelt.

Gegenstand der Erfindung ist daher ein Verfahren zur Polymerisation von 1-Olefinen der Formel $R^4CH = CH_2$, in der $R^4$ Wasserstoff oder einen Alkylrest mit 1 bis 10 Kohlenstoffatomen bedeutet, in Gegenwart eines Katalysators, der aus einer magnesium- und titanhaltigen Komponente (Komponente A) und einer metallorganischen Verbindung der Gruppe I bis III des Periodensystems (Komponente B) besteht, dadurch gekennzeichnet, daß man in Gegenwart eines Katalysators polymerisiert, dessen Komponente A in der Weise hergestellt wurde, daß in einer ersten Reaktionsstufe ein Magnesiumalkoholat mit Titantetrachlorid in einem Kohlenwasserstoff bei einer Temperatur von 50 bis 100° C umgesetzt wurde, anschließend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 110 bis 200° C unter Zusatz eines Chloralkoxytitanats einer thermischen Behandlung unterworfen wurde, bis keine Alkylchloridspaltung mehr erfolgte, und danach der Feststoff durch mehrmaliges Waschen mit einem Kohlenwasserstoff von löslichen Reaktionsprodukten befreit wurde.

Gegenstand der Erfindung ist aber auch der für dieses Verfahren verwendete Katalysator und dessen Herstellung.

Zur Herstellung der Komponente A wird ein Magnesiumalkoholat verwendet.

Dieses Magnesiumalkoholat kann ein »einfaches« Magnesiumalkoholat der Formel $Mg(OR)_2$ sein, in der R gleiche oder verschiedene Alkylreste mit 1 bis 6 Kohlenstoffatomen bedeutet. Beispiele sind

$Mg(OC_2H_5)_2$, $Mg(OiC_3H_7)_2$, $Mg(OnC_3H_7)_2$,
$Mg(OnC_4H_9)_2$, $Mg(OCH_3)(OC_2H_5)$,
$Mg(OC_2H_5)(OnC_3H_7)$.

Es kann auch ein »einfaches« Magnesiumalkoholat der Formel $MG(OR)_nX_m$ verwendet werden, in der X = Halogen, $(SO_4)_{1/2}$, OH, $(CO_3)_{1/2}$, $(PO_4)_{1/3}$, Cl ist, R die oben genannte Bedeutung hat und n + M = 2 ist.

Es kann jedoch auch ein »komplexes« Magnesiumalkoholat eingesetzt werden.

Als »komplexes« Magnesiumalkoholat wird ein Magnesiumalkoholat bezeichnet, das neben Magnesium mindestens ein Metall der 1. bis 4. Hauptgruppe des Periodensystems enthält. Beispiele für ein derartiges komplexes Magnesiumalkoholat sind:

$[Mg(OiC_3H_7)_4]Li_2$; $[Al_2(OiC_3H_7)_8]Mg$;
$[Si(OC_2H_5)_6]Mg$; $[Mg(OC_2H_5)_3]Na$;
$[Al_2(OiC_4H_9)_8]Mg$;
$[Al_2(O-secC_4H_9)_6(OC_2H_5)_2]Mg$.

Die Herstellung der komplexen Magnesiumalkoholate (Alkoxosalze) erfolgt nach bekannter Methode (Lit.: Meerwein; Ann. 455 (1927) Seite 234, 476 (1929 Seite 113; Houben—Weyl, Methoden der organischen Chemie, Band 6/2 Seite 30). Für die Herstellung des komplexen Magnesiumalkoholats seien folgende Beispiele genannt:

1. Man läßt zwei Metallalkoholate in einem geeigneten Lösungsmittel aufeinander einwirken, zum Beispiel

$$2\,Al(OR)_3 + Mg(OR)_2 \rightarrow [Al_2(OR)_8]Mg$$

2. Auflösen von Magnesium in einer alkoholischen Lösung eines Metallalkoholats

$$2\,LiOR + Mg + 2\,ROH \rightarrow [Mg(OR)_4]Li_2 + H_2$$

3. Gleichzeitiges Auflösen zweier Metalle in Alkohol

$$8\,ROH + Mg + 2\,Al \rightarrow [Al_2(OR)_8]Mg + 4\,H_2$$

Bevorzugt verwendet werden die einfachen Magnesiumalkoholate, insbesondere $Mg(OC_2H_5)_2$, $Mg(OnC_3H_7)_2$ und $Mg(OiC_3H_7)_2$. Das Magnesiumalkoholat wird in reiner Form oder auf einem inerten Träger fixiert eingesetzt.

Die Herstellung der Komponente A erfolgt in zwei Raktionsstufen bei unterschiedlicher Temperatur.

In der ersten Reaktionsstufe wird das Magnesiumalkoholat mit Titantetrachlorid bei einer Temperatur von 50 bis 100° C, vorzugsweise von 60 bis 90° C, in Gegenwart eines inerten Kohlenwasserstoffs unter Rühren umgesetzt. Auf 1 Mol Magnesiumalkoholat werden 1 bis 5 Mol Titantetrachlorid eingesetzt, vorzugsweise 1,4 bis 3,5 Mol Titantetrachlorid auf 1 Mol Magnesiumalkoholat.

Als inerter Kohlenwasserstoff eignet sich ein aliphatischer oder cycloaliphatischer Kohlenwasserstoff wie Butan, Pentan, Hexan, Heptan, Isooctan, Cylclohexan, Methylcyclohexan, sowie ein aromatischer Kohlenwasserstoff wie Toluol, Xylol; auch eine hydrierte Dieselöl- oder Benzinfraktion, die sorgfältig von Sauerstoff, Schwefelverbindungen und Feuchtigkeit befreit worden ist, ist brauchbar.

Die Reaktionsdauer der ersten Stufe beträgt 0,5 bis 8 Stunden, vorzugsweise 2 bis 6 Stunden.

In der ersten Reaktionsstufe findet ein weitgehender Austausch der Alkoxygruppen des Magnesiumalkoholats mit den Chloratomen des Titantetrachlorids statt. Als Reaktionsprodukt erhält man dabei einen kohlenwasserstoffunlöslichen magnesium- und titanhaltigen Feststoff, der vorwiegend Magnesiumchlorid enthält, und kohlenwasserstofflösliche, Chlor und Alkoxygruppen enthaltende Titanverbindungen.

Anschließend wird das in dem Kohlenwasserstoff unlösliche Reaktionsprodukt von Magnesiumalkoholat mit Titantetrachlorid durch mehrmaliges Waschen mit einem inerten Kohlenwasserstoff von nicht umgesetzten, löslichen Titanverbindungen befreit.

Der erhaltene Feststoff wird wieder in einem Kohlenwasserstoff suspendiert und in einer zweiten Reaktionsstufe bei einer Temperatur von 110 bis 200° C unter Zusatz eines Chloralkoxytitanats einer thermischen Behandlung unterworfen, bis keine Alkylchloridabspaltung mehr erfolgt.

In der Regel ist dafür eine Reaktionsdauer von 1 bis 100 h erforderlich.

Als Chloralkoxyverbindung wird eine solche der Formel $TiCl_n(OR^1)_{4-n}$, worin $R^1$ gleiche oder verschiedene Alkylreste mit 1 bis 20 Kohlenstoffatomen und $n = 1$ bis 3 bedeuten, verwendet.

Beispiele für erfindungsgemäß zu verwendende Chloralkoxytitanate sind:

$Ti(OC_2H_5)_3Cl$, $Ti(OC_2H_5)_2Cl_2$, $Ti(OC_2H_5)Cl_3$, $Ti(OC_3H_7)_3Cl$, $Ti(OiC_3H_7)_3Cl$, $Ti(OC_3H_7)_2Cl_2$, $Ti(OiC_3H_7)_2Cl_2$, $Ti(OC_3H_7)Cl_3$, $Ti(OiC_3H_7)Cl_3$, $Ti(OiC_4H_9)_2Cl_2$, $Ti(OC_8H_{17})Cl_3$, $Ti(OC_{16}H_{33})Cl_3$.

Bevorzugt verwendet werden:

$Ti(OC_2H_5)_2Cl_2$, $Ti(OC_2H_5)Cl_3$, $Ti(OC_3H_7)_2Cl_2$, $Ti(OC_3H_7)Cl_3$, $Ti(OiC_3H_7)_2Cl_2$ und $Ti(OiC_3H_7)Cl_3$.

Pro Molteil in der ersten Reaktionsstufe eingesetztes Magnesiumalkoholat werden 0,1 bis 3 Molteile Chloralkoxytitanat eingesetzt.

Anschließend trennt man durch mehrmaliges Waschen mit einem Kohlenwasserstoff alle löslichen Reaktionsprodukte ab und erhält einen im Kohlenwasserstoff unlöslichen, magnesium- und titanhaltigen Feststoff, der als Komponente A bezeichnet wird.

Die Herstellung des erfindungsgemäß zu verwendenden Polymerisationskatalysators erfolgt durch Zusammenbringen der Komponente A und einer metallorganischen Verbindung der Gruppe I bis III des Periodensystems (Komponente B).

Vorzugsweise verwendet man als Komponente B aluminiumorganische Verbindungen. Als aluminiumorganische Verbindungen eignen sich chlorhaltige aluminiumorganische Verbindungen, die Dialkylaluminiummonochloride der Formel $R_2^2AlCl$ oder Alkylaluminiumsesquichloride der Formel $R_3^2Al_2Cl_3$, worin $R^2$ gleiche oder verschiedene Alkylreste mit 1 bis 16 Kohlenstoffatomen sein kann. Als Beispiele seien genannt

$(C_2H_5)_2AlCl$, $(iC_4H_9)_4AlCl$, $(C_2H_5)_3Al_2Cl_3$.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Zum anderen eignen sich als solche chlorfreie aluminiumorganische Verbindungen Aluminiumtrialkyle $AlR_3^3$ oder Aluminiumdialkylhydride der Formel $AlR_2^3H$, in denen $R^3$ gleiche oder verschiedene Alkylreste mit 1 bis 16 Kohlenstoffatomen bedeutet. Beispiele sind

$Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt:

$Al(C_2H_5)_3$ und $Al(iC_4H_9)_3$, $Al(C_2H_5)_2Cl$ und $Al(C_8H_{17})_3$, $Al(C_2H_5)_3$ und $Al(C_8H_{17})_3$, $Al(C_4H_9)_2H$ und $Al(C_8H_{17})_3$, $Al(iC_4H_9)_3$ und $Al(C_8H_{17})_3$, $Al(C_2H_5)_3$ und $Al(C_{12}H_{25})_3$, $Al(iC_4H_9)_3$ und $Al(C_{12}H_{25})_3$, $Al(C_2H_5)_3$ und $Al(C_{16}H_{33})_3$, $Al(C_3H_7)_3$ und $Al(C_{18}H_{37})_2(iC_4H_9)$, $Al(C_2H_5)_3$ und Aluminiumisoprenyl (Umsetzungsprodukt von Isopren mit $Al(iC_4H_9)_3$ oder $Al(iC_4H_9)_2H$.

Das Mischen der Komponente A und der Komponente B kann vor der Polymerisation in einem Rührkessel bei einer Temperatur von −30° C bis 150° C, vorzugsweise −10 bis 120° C erfolgen. Es ist auch möglich, die beiden Komponenten direkt im Polymerisationskessel bei einer Polymerisationstemperatur von 20 bis 200° C zu vereinigen. Die Zugabe der Komponente B kann jedoch auch in zwei Schritten erfolgen, indem vor der Polymerisationsreaktion die Komponente A mit einem Teil der Komponente B bei einer Temperatur von −30° C bis 150° C voraktiviert wird und die weitere Zugabe der Komponente B in dem Polymerisationsreaktor bei einer Temperatur von 20 bis 200° C erfolgt.

Der erfindungsgemäß zu verwendende Polymerisationskatalysator wird zur Polymerisation von 1-Olefinen der Formel $R^4CH = CH_2$, in der $R^4$ Wasserstoff oder einen Alkylrest mit 1 bis 10 Kohlenstoffatomen bedeutet, eingesetzt, beispielsweise Ethylen, Propylen, Buten-(1), Hexen-(1), 4-Methylpenten-(1), Octen-(1). Vorzugsweise wird Ethylen allein oder als Gemisch von mindestens 70 Gew.-% Ethylen und maximal 30 Gew.-% eines anderen 1-Olefins der obigen Formel polymerisiert. Insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200° C, vorzugsweise 50 bis 150° C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente A in einer Konzentration, bezogen auf Titan, von 0,0001 bis 1, vorzugsweise 0,001 bis 0,5 mMol Ti pro Liter Dispergiermittel bzw. pro Liter Reaktorvolumen angewendet. Die metallorganische Verbindung wird in einer Konzentration von 0,1 bis 5 mMol, vorzugsweise 0,5 bis 4 mMol pro Liter Dispergiermittel bzw. pro Liter Reaktorvolumen verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Das Molekulargewicht des Polymerisats wird in bekannter Weise geregelt; vorzugsweise wird dazu Wasserstoff verwendet.

Das erfindungsgemäße Verfahren ergibt infolge der hohen Aktivität des zu verwendenden Katalysators Polymerisate mit sehr geringem Titan- und Halogengehalt und daher äußerst guten Werten im Farbbeständigkeits- und Korrosionstest. Ferner ermöglicht es die Herstellung von Polymerisaten mit sehr breiter Molekulargewichtsverteilung; die Mw/Mn-Werte der Polymerisate liegen über 10.

Ein weiterer entscheidender Vorteil des erfindungsgemäßen Verfahrens ist darin zu sehen, daß es die Herstellung von Polymerisaten mit extrem unterschiedlichen Molekulargewichten allein durch unterschiedliche Wasserstoffkonzentrationen ermöglicht. Beispielsweise entstehen bei der Polymerisation ohne Wasserstoff Polymerisate mit Molekulargewichten über 2 Millionen und bei Wasserstoffgehalten von 70 Vol.-% im Gasraum Polymerisate mit Molekulargewichte im Bereich von 30 000.

Die Polymerisate lassen sich nach dem Extrusions- und Extrusionsblasverfahren zu Hohlkörpern, Rohren, Kabeln und Folien mit glatten Oberflächen bei hohen Durchsatzleistungen verarbeiten.

Aufgrund eines besonderen strukturellen Aufbaues zeichnen sich die aus den erfindungsgemäß erhaltenen Polyolefinen hergestellten Hohlkörpern und Flaschen durch eine hohe Unempfindlichkeit gegen Spannungsrißbildung aus.

Weiterhin ermöglicht das erfindungsgemäße Verfahren bei der Suspensions- und Gasphasenpolymerisation die Herstellung von rieselfähigen Polymerisatpulvern mit hohen Schüttdichten, so daß eine direkte Weiterverarbeitung zu Formkörpern ohne Granulierschritt erfolgen kann.

## Beispiele

Bei den nachfolgenden Beispielen wird zur Kontaktherstellung und zur Polymerisation eine hydrierte Dieselölfraktion mit einem Siedebereich von 130 bis 170° C verwendet.

Der Titangehalt der Katalysatoren wird kolorimetrisch bestimmt (Lit. G. O. Müller, Praktikum der quantitativen chemischen Analyse 4. Auflage (1957) S. 243).

Der Schmelzindex MFI wird nach DIN 53 735 (E) bestimmt.

Die Mw/Mn-Werte werden aus den fraktionierdaten eines Gelpermeationschromatographen in 1,2,4-Trichlorbenzol als Lösungs- und Elutionsmittel bei 130° C ermittelt.

Die Viskosität VZ wird nach DIN 53 728 Blatt 4 mit einem Ubblelohde-Viskosimeter in Dekahydronaphthalin als Lösungsmittel bestimmt.

Die Bestimmung der Dichte erfolgt nach DIN 53 479, die der Schüttdichte nach DIN 53 468.

## Beispiel 1

### a) Herstellung der Komponente A

228,6 g Magnesiumethylat werden in einem 4 l Vierhalskolben mit Tropftrichter, KPG-Rührer, Rückflußkühler und Thermometer in 2,5 l einer Dieselölfraktion unter $N_2$-Überlagerung dispergiert. Zu dieser Dispersion werden innerhalb von 5 h bei 90° C 760 g Titantetrachlorid getropft. Das Umsetzungsprodukt wird danach mit der Dieselölfraktion gewaschen, bis die überstehende Lösung kein Titan mehr enthält.

Nach dem Trocknen besitzt der Feststoff der ersten Reaktionsstufe folgende analytische Zusammensetzung:

| | |
|---|---|
| Ti | 3,7 Gew.-% |
| Mg | 21,2 Gew.-% |
| Cl | 64,5 Gew.-% |

Der gesamte Feststoff wird erneut in einem 4 l Vierhalskolben mit Tropftrichter, KPG-Rührer, Rückflußkühler und Thermometer in 1,5 l der Dieselölfraktion unter $N_2$-Überlagerung dispergiert. Zu dieser Dispersion werden bei 120° C 598 g $Ti(OC_2H_5)Cl_3$ in 0,5 l Dieselölfraktion innerhalb 15 Minuten zugegeben und der Ansatz anschließend 70 Stunden bei dieser Temperatur gerührt.

Zum Abtreiben gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 60 h ist die Abspaltung von gasförmigen Reaktionsprodukten beendet. In der Kühlfalle befinden sich 148 g einer wasserklaren Flüssigkeit folgender Zusammensetzung:

| | |
|---|---|
| Cl | 55 Gew.-% |
| C | 37 Gew.-% |
| H | 8 Gew.-% |

Es handelt sich um Ethylchlorid. Anschließend wird das Umsetzungsprodukt mit der Dieselölfraktion gewaschen, bis die überstehende Lösung kein Titan mehr enthält.

Nach dem Trocknen besitzt der Feststoff (Komponente A) folgende analytische Zusammensetzung:

| | |
|---|---|
| Ti | 24,3 Gew.-% |
| Mg | 9,7 Gew.-% |
| Cl | 49,4 Gew.-% |

Das Atomverhältnis Cl : Ti beträgt 2,74.

### b) Voraktivierung der Komponente A

25,6 g der Komponente A werden in 300 ml Dieselöl suspendiert und bei 20° C unter Rühren mit 100 ml einer Aluminiumisoprenyllösung, die 1 Mol Aluminiumisoprenyl pro 1 l enthält, versetzt. Dadurch wird 19,2 Gew.-% des vierwertigen Titans zu Titan-(III) reduziert.

### c) Ethylenpolymerisation in Suspension

In einem 150 l Kessel werden 100 l Dieselöl, 200 mMol Aluminiumisoprenyl und 8,8 ml der unter b) beschriebenen Dispersion gegeben. Anschließend werden bei einer Polymerisationstemperatur von 85° C 5 kg Ethylen pro Stunde und soviel $H_2$ eingeleitet, daß der $H_2$-Gehalt im Gasraum 55 Vol.-% beträgt. Nach 6 Stunden wird die Polymerisation bei einem Druck von 24,2 bar durch Entspannen beendet. Die Suspension wird filtriert und das Polyethylenpulver durch Überleiten von heißem Stickstoff getrocknet.

Es werden 29,6 kg Polyethylen erhalten. Dies entspricht einer Kontaktaktivität von 52,6 kg PE/g Katalysatorfeststoff (Komponente A) oder 10,4 kg PE/mMol Ti. Das Polyethylenpulver besitzt einen MFI 190/5 von 0,82 g/10 min. Die Molekulargewichtsverteilungsbreite Mw/Mn ist 18, der MFI 190/15/ MFI 190/5 beträgt 9,8. Die Dichte ist 0,956 g/$cm^3$ und die Schüttdichte des Pulvers ist 0,43 g/$cm^3$.

## Beispiel 2

### Ethylenpolymerisation in Suspension

Unter den gleichen Bedingungen wie im Beispiel 1c) beschrieben werden in den Kessel 150 mMol Aluminiumtriisobutyl und 2,4 ml der im Beispiel 1b) beschriebenen Dispersion gegeben.

Anschließend werden bei einer Polymerisationstemperatur von 75° C 5 kg Ethylen pro Stunde eingeleitet. Nach 6 Stunden wird die Polymerisation bei einem Druck von 23,2 bar durch Entspannen beendet. Die Suspension wird filtriert und das Polyethylenpulver durch Überleiten von heißem Stickstoff getrocknet. Man erhält 28,3 kg Polyethylen. Das entspricht einer Kontaktaktivität von 184 kg PE/g Katalysatorfeststoff oder 36,3 kg PE/mMol Ti. Das Polyethylenpulver hat eine VZ von 2.100 ml/g; das entspricht einem Molekulargewicht von 1,9 Millionen. Die Schüttdichte beträgt 0,47 g/$cm^3$.

## Beispiel 3

### Ethylenpolymerisation in Suspension

Unter den gleichen Bedingungen wie im Beispiel 1c) beschrieben werden in den Kessel 200 mMol Diisobutylaluminiumhydrid und

33,4 ml der im Beispiel 1b) beschriebenen Dispersion gegeben. Anschließend werden bei einer Polymerisationstemperatur von 85° C 4 kg Ethylen pro Stunde und soviel $H_2$ eingeleitet, daß der $H_2$-Gehalt im Gasraum 75 Vol.-% beträgt. Nach 6 Stunden wird die Polymerisation bei einem Druck von 23,7 bar durch Entspannen beendet. Die Suspension wird filtriert und das Polyethylenpulver durch Überleiten von heißem Stickstoff getrocknet. Es werden 22,8 kg Polyethylen isoliert. Dies entspricht einer Kontaktausbeute von 10,7 kg PE/g Katalysatorfeststoff oder 2,1 kg PE/mMol Ti. Das Polyethylen hat einen MFI 190/5 von 88 g/10 min, eine VZ von 112 ml/g, eine Dichte von 0,964 g/cm³ und eine Schüttdichte von 0,48 g/cm³. Die Molekulargewichtsverteilungsbreite Mw/Mn beträgt 23.

Beispiel 4

Ethylen-Buten-1-Copolymerisation in Suspension

In einem 150 l Kessel werden 100 l Hexan, 150 mMol Aluminiumisoprenyl und 14,7 ml der im Beispiel 1b) beschriebenen Dispersion vorgelegt. Danach wird bei einer Polymerisationstemperatur von 85° C 5 kg Ethylen/Stunde, 0,5 l Buten-1/Stunde und soviel $H_2$ eingeleitet, daß sich im Gasraum ein $H_2$-Gehalt von 50 Vol.-% einstellt.

Nach 6 Stunden wird die Polymerisation bei einem Polymerisationsdruck von 7,8 bar beendet. Das Polymerisatpulver wird durch Filtration abgetrennt und mit heißem Stickstoff getrocknet. Es werden 30,6 kg Polymerisat erhalten. Das entspricht einer Kontaktausbeute von 32,6 kg Polymerisat/g Katalysatorfeststoff oder 6,4 kg Polymeres/mMol ti.

Das Ethylen-Buten-1-Copolymerisat besitzt einen MFI 190/5 von 0,68 g/10 min, ein Verhältnis MFI 190/15/MFI 190/5 von 9,3, eine Dichte von 0,943 g/cm³ und eine Schüttdichte von 0,41 g/cm³.

Beispiel 5

Ethylen-Octen-1-Copolymerisation in Suspension

In einem 1,5 l Stahlautoklaven werden 750 ml Hexan, 5 mMol Aluminiumtriethyl und 1,8 mg der Komponente A (Beispiel 1a)) gegeben. Anschließend werden bei einer Polymerisationstemperatur von 85° C 8 bar $H_2$ und 15 bar Ethylen aufgedrückt. Das Ethylen wird in der Menge eingeleitet, daß ein Gesamtdruck von 23 bar aufrechterhalten wird. Gleichzeitig werden 25 ml Octen-1 pro Stunde zu dosiert. Nach 4 h wird der Versuch abgebrochen. Das Copolymerisat wird durch Filtration abgetrennt und im Vakuumtrockenschrank getrocknet. Es werden 104 g Polymerisat erhalten. Dies entspricht einer Kontaktausbeute von 57,8 kg Polymeres/g Katalysatorfeststoff oder 11,4 kg Polymeres/mMol Ti. Das Ethylen-Octen-1-Copolymerisat besitzt einen Schmelzindex MFI 190/5 von 0,47 g/10 min und eine Dichte von 0,949 g/cm³.

Beispiel 6

Gasphasenpolymerisation von Ethylen

In einem liegenden 20 l Reaktor mit wandgängigem Rührer werden 500 g Polyethylenpulver (MFI 190/5 = 1,6 g/10 min, Schüttdichte = 0,43 g/cm³, Dichte = 0,925 g/cm³) vorgelegt. Der Reaktor wird durch mehrmaliges Evakuieren und mehrstündiges Spülen mit Ethylen von Luft befreit und dann auf 85° C erwärmt. In den Reaktor werden 50 mMol Aluminiumtriethyl und 51,7 mg der im Beispiel 1a) hergestellten Katalysatorkomponente gegeben.

Es werden 350 g Ethylen/h, 80 g Buten-1/h und so viel Wasserstoff eingeleitet, daß der Wasserstoffanteil während der Polymerisation immer 30 Vol.-% beträgt. Der Druck steigt im Laufe der Reaktion auf 19 bar an. Nach 6 h wird die Polymerisation abgebrochen. Es werden 3,0 kg Polymerisat mit einem MFI 190/5 von 0, 95 g/10 min, einer Dichte von 0,921 g/cm³ und einer Schüttdichte von 0,44 g/cm³ erhalten. Das entspricht einer Kontaktausbeute von 48,4 kg PE/g Katalysatorfeststoff oder 9,5 kg PE/mMol Ti.

Beispiel 7

Ethylen-Hexen-1-Copolymerisation in Suspension

In einem 500 l Kessel werden 360 l Dieselöl, 540 ml Aluminiumisoprenyl und 53 ml der im Beispiel 1b) beschriebenen Kontaktdispersion vorgelegt. Bei einer Polymerisationstemperatur von 85° C werden 18 kg Ethylen/h, 2 l Hexen-1/h und soviel $H_2$ eingeleitet, daß sich im Gasraum ein $H_2$-Gehalt von 47 Vol.-% einstellt.

Nach 6 h wird die Polymerisation bei einem Polymerisationsdruck von 8,5 bar durch Entspannen beendet. Die Suspension wird auf Raumtemperatur abgekühlt, der Feststoff durch Filtration abgetrennt und mit heißem $H_2$ getrocknet.

Es werden 110,8 kg Produkt mit einem MFI 190/5 von 1,1 g/10 min, einem MFI 190/15/MFI 190/5 von 9,5, einer Dichte von 0, 946 g/cm³ und einer Schüttdichte von 0,42 g/cm³ erhalten. Das entspricht einer Kontaktausbeute von 32,7 kg Copolymeres/g Katalysatorfeststoff oder 6,4 kg Copolymeres/mMol Ti.

Auf einer Hohlkörper-Blasanlage (Extruderschnecke D = 60 mm) werden aus dem Pulver Flaschen hergestellt. Bei einer Schneckendrehzahl von 40 Upm wird ein sehr hoher Ausstoß von 59 kg/h erhalten. Die Flaschen zeigen eine sehr glatte Oberfläche und besitzen im Spannungsrißtest nach Bell eine sehr hohe Spannungsrißbeständigkeit von 960 h.

Vergleichsbeispiel A

a) Herstellung der Komponente A

228,6 g Magnesiumethylat werden in einem 4 l Vierhalskolben mit Tropftrichter, KPG-Rührer, Rückflußkühler und Thermometer in 2,5 l einer Dieselölfraktion unter $N_2$-Überlagerung dispergiert. Zu dieser Dispersion werden unter Durchleiten eines schwachen $N_2$-Stromes innerhalb von 5 h bei 90° C 760 g Titantetrachlorid getropft. Anschließend wird das Reaktionsprodukt mit der Dieselölfraktion gewaschen, bis die überstehende Lösung kein Titan mehr enthält. Nach Trocknung besitzt der Feststoff (Komponente A) folgende analytische Zusammensetzung:

| | |
|---|---|
| Ti | 3,7 Gew.-% |
| Mg | 21,2 Gew.-% |
| Cl | 64,5 Gew.-% |

b) Voraktivierung der Komponente A

25,6 g der Komponente A werden mit Dieselöl auf 300 ml aufgefüllt und bei 20° C unter Rühren mit 100 ml einer Lösung von Aluminiumisoprenyl in Dieselöl versetzt, die 1 Mol Aluminiumisoprenyl pro 1 l Lösung enthält.

Dadurch wird 39 Gew.-% des vierwertigen Titans zu Titan(III) reduziert.

c) Ethylenpolymerisation in Suspension

In einem 500 l Kessel werden 360 l Hexan, 540 mMol Aluminiumisoprenyl und 247 g der unter a) beschriebenen Katalysatorkomponente gegeben. Danach werden bei 85° C 18 kg Ethylen pro Stunde und soviel $H_2$ eingeleitet, daß der $H_2$-Gehalt im Gasraum 40 Vol.-% beträgt. Nach 6 h wird die Polymerisation bei einem Druck von 5,2 bar durch Entspannen abgebrochen. Es werden 105,1 kg Polyethylen erhalten. Das entspricht einer Kontaktausbeute von 6,6 kg/g Katalysatorfeststoff oder 8,6 kg PE/mMol Ti.

Das Produkt hat einen MFI 190/5 von 1,3 g/10 min, einen MFI 190/15/MFI 190/5 von 5,6, eine Dichte von 0,955 $g/cm^3$ und eine Schüttdichte von 0,44 $g/cm^3$. Das Produkt besitzt eine enge Molekulargewichtsverteilung: $Mw/Mn = 5,4$.

Bei einer Verarbeitung des Pulvers auf einer Hohlkörper-Blasanlage (Extruderschnecke D = 60 mm) erhält man bei einer Schneckendrehzahl von 40 Upm einen Ausstoß von 41 kg/h. Die Flaschen zeigen eine rauhe Oberfläche, da beim Verarbeiten »melt fracture« auftritt. Die Spannungsrißbeständigkeit der Flaschen im Test nach Bell beträgt 54 Stunden.

d) Ethylenpolymerisation in Suspension

In einem 150 l Kessel werden 100 l Dieselöl, 200 mMol Aluminiumisoprenyl und 84 ml der unter b) beschriebenen Dispersion gegeben. Anschließend werden bei einer Polymerisationstemperatur von 85° C 5 kg Ethylen pro h und soviel $H_2$ eingeleitet, daß der $H_2$-Gehalt im Gasraum 55 Vol.-% beträgt. Nach 6 h wird die Polymerisation bei einem Druck von 23,5 bar durch Entspannen beendet. Die Suspension wird filtriert und das Polyethylenpulver durch Überleiten von heißem Stickstoff getrocknet.

Man erhält 28,7 kg Polyethylen. Dies entspricht einer Kontaktaktivität von 5,3 kg PE/g Katalysatorfeststoff oder 6,9 kg PE/mMol Titan.

Das Produkt hat einen MFI 190/5 von 7,8 g/10 min, einen MFI 190/15/MFI 190/5-Wert von 5,4, eine Schüttdichte von 0,44 $g/cm^3$. Das Produkt besitzt eine enge Molekulargewichtsverteilung: $Mw/Mn = 4,9$.

Beispiel 8

a) Herstellung der Komponente A

228,6 g Magnesiumethylat werden in einem 4 l Vierhalskolben mit Tropftrichter, KPG-Rührer, Rückflußkühler und Thermometer in 2,5 l Dieselölfraktion unter $N_2$-Überlagerung dispergiert. Zu dieser Dispersion werden innerhalb von 4 h bei 80° C 532 g Titantetrachlorid getropft.

Das Umsetzungsprodukt wird danach mit der Dieselölfraktion gewaschen, bis die überstehende Lösung kein Titan mehr enthält.

Nach dem Trocknen besitzt der Feststoff der ersten Reaktionsstufe folgende analytische Zusammensetzung:

| | |
|---|---|
| Ti | 7,3 Gew.-% |
| Mg | 17,0 Gew.-% |
| Cl | 55,0 Gew.-% |

Der gesamte Feststoff wird in einem 4 l Vierhalskolben mit Tropftrichter, KPG-Rührer, Rückflußkühler und Thermometer in 1,5 l der Dieselölfraktion unter $N_2$-Überlagerung dispergiert. Zu dieser Dispersion werden bei 150° C 568 g $Ti(OC_3H_7)_2Cl_2$ in 0,5 l der Dieselölfraktion in 15 Minuten zugegeben und der Ansatz anschließend 18 h bei dieser Temperatur gerührt.

Zum Abtreiben gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 18 h ist die Abspaltung von gasförmigen Reaktionsprodukten beendet. In der Kühlfalle befinden sich 249 g einer wasserklaren Flüssigkeit folgender Zusammensetzung:

| | |
|---|---|
| Cl | 45 Gew.-% |
| C | 46 Gew.-% |
| H | 9 Gew.-% |

Es handelt sich um Propylchlorid.

Anschließend wird das Umsetzungsprodukt mit der Dieselölfraktion gewaschen, bis die

überstehende Lösung kein Titan mehr enthält.

Nach dem Trocknen enthält der Feststoff (Komponente A)

| | |
|---|---|
| Ti | 22,3 Gew.-% |
| Mg | 10,1 Gew.-% |
| Cl | 45,3 Gew.-% |

Das Atomverhältnis Cl : Ti beträgt 2,70.

b) Voraktivierung der Komponente A

28,3 g der Komponente A werden mit Dieselöl auf 300 ml aufgefüllt und bei 20°C unter Rühren mit 100 ml einer Aluminiumtriisobutyllösung, die 1 Mol $Al(iC_4H_9)_3$ pro 1 l enthält, versetzt. Dadurch wird 33 Gew.-% des vierwertigen Titans zu Titan-(III) reduziert.

c) Ethylenpolymerisation in Suspension

In einem 150 l Kessel werden 100 l Dieselöl, 50 mMol Aluminiumtriisobutyl und 6,2 ml der unter b) beschriebenen Dispersion gegeben. Anschließend werden bei einer Polymerisationstemperatur von 85°C 5 kg Ethylen pro Stunde und soviel $H_2$ eingeleitet, daß der $H_2$-Gehalt im Gasraum 30 Vol.-% beträgt. Nach 6 h wird die Polymerisation bei einem Druck von 24,1 bar durch Entspannen beendet. Die Suspension wird filtriert und das Polyethylenpulver durch Überleiten von heißem Stickstoff getrocknet.

Es werden 28,2 kg Polyethylen erhalten. Dies entspricht einer Kontaktaktivität von 64,3 kg PE/g Katalysatorfeststoff oder 13,9 kg PE/mMol Ti. Das Polyethylenpulver besitzt einen MFI 190/5 von 0,29 g/10 min. Die Molekulargewichtsverteilungsbreite Mw/Mn ist 19, der MFI 190/150/MFI 190/5 beträgt 10,3. Die Dichte ist 0,950 g/cm³ und die Schüttdichte des Pulvers ist 0,43 g/cm³.

Beispiel 9

a) Herstellung der Komponente A

142,3 g Magnesiumisopropylat werden in einem 3 l Vierhalskolben mit Tropftrichter, KPG-Rührer, Rückflußkühler und Thermometer in 1,0 l Dieselölfraktion unter $N_2$-Überlagerung dispergiert. Zu dieser Dispersion werden innerhalb von 4 h bei 65°C 332 g Titantetrachlorid getropft.

Das Umsetzungsprodukt wird danach mit der Dieselölfraktion gewaschen, bis die überstehende Lösung kein Titan mehr enthält.

Nach dem Trocknen besitzt der Feststoff der ersten Reaktionsstufe folgende analytische Zusammensetzung:

| | |
|---|---|
| Ti | 7,6 Gew.-% |
| Mg | 14,9 Gew.-% |
| Cl | 49,2 Gew.-% |

Der gesamte Feststoff wird in einem 3 l Vierhalskolben mit Tropftrichter, KPG-Rührer, Rückflußkühler und Thermometer in 0,75 l der Dieselölfraktion unter $N_2$-Überlagerung dispergiert. In dieser Dispersion werden bei 115°C 470 g $Ti(OiC_3H_7)Cl_3$ in 0,5 l dieser Dieselölfraktion in 15 Minuten zugegeben und anschließend 40 h bei dieser Temperatur gerührt.

Zum Abtreiben gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 40 h ist die Abspaltung von gasförmigen Reaktionsprodukten beendet. In der Kühlfalle befinden sich 153 g einer wasserklaren Flüssigkeit der nachstehenden Zusammensetzung:

| | |
|---|---|
| Cl | 45,5 Gew.-% |
| C | 46,2 Gew.-% |
| H | 9 Gew.-% |

Es handelt sich um Isopropylchlorid.

Anschließend wird das Umsetzungsprodukt mit der oben erwähnten Dieselölfraktion gewaschen, bis die überstehende Lösung kein Titan mehr enthält.

Nach dem Trocknen besitzt der Feststoff (Komponente A) folgende analytische Zusammensetzung:

| | |
|---|---|
| Ti | 27,7 Gew.-% |
| Mg | 8,2 Gew.-% |
| Cl | 44,4 Gew.-% |

Das Atomverhältnis Cl : Ti beträgt 2,2.

b) Ethylen-Buten-1-Copolymerisation in Suspension

In einem 150 l Kessel werden 100 l Dieselöl, 80 mMol Aluminiumtriisobutyl und 846 g des unter a) beschriebenen Katalysatorfeststoffes gegeben. Anschließend werden bei einer Polymerisationstemperatur von 85°C 5 kg Ethylen pro Stunde, 0,5 l Buten-1/h und soviel $H_2$ eingeleitet, daß der $H_2$-Gehalt im Gasraum 45 Vol.-% beträgt. Nach 6 h wird die Polymerisation bei einem Druck von 22,3 bar durch Entspannen beendet. Die Suspension wird filtriert und das Copolymerisatpulver durch Überleiten von heißem Stickstoff getrocknet.

Es werden 28,7 kg Produkt erhalten. Dies entspricht einer Kontaktaktivität von 34 kg Copolymeres/g Katalysatorfeststoff oder 5,9 kg Copolymeres/mMol Ti. Das Copolymerpulver besitzt einen MFI 190/5 von 0,48 g/10 min. Die Molekulargewichtsverteilungsbreite Mw/Mn ist 23, der MFI 190/15/MFI 190/5 beträgt 9,9. Die Dichte ist 0,948 g/cm³ und die Schüttdichte des Pulvers ist 0,38 g/cm³.

**Patentansprüche**

1. Verfahren zur Polymerisation von 1-Olefinen der Formel $R^4 - CH = CH_2$, in der $R^4$ Wasserstoff oder einen Alkylrest mit 1 bis 10 Kohlenstoffatomen bedeutet, in Gegenwart eines Katalysators, der aus einer magnesium- und titanhaltigen Komponente (Komponente A) und einer metallorganischen Verbindung der Gruppe I bis III des Periodensystems (Komponente B) besteht, dadurch gekennzeichnet, daß man in Gegenwart eines Katalysators polymerisiert, dessen Komponente A in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, anschließend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 110 bis 200°C unter Zusatz eines Chloralkoxytitanats einer thermischen Behandlung unterworfen wurde, bis keine Alkylchloridabspaltung mehr erfolgte, und danach der Feststoff durch mehrmaliges Waschen mit einem Kohlenwasserstoff von löslichen Reaktionsprodukten befreit wurde.

2. Verfahren nach Anspruch 1, dadurch gekennzeichnet, daß zur Herstellung der Komponente A in einer ersten Reaktionsstufe ein Magnesiumalkoholat mit Titantetrachlorid in einem Kohlenwasserstoff bei einer Temperatur von 50 bis 100°C umgesetzt wurde, anschließend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 100 bis 200°C unter Zusatz eines Chloralkoxytitanats der Formel $TiCl_n(OR^1)_{4-n}$, worin $R^1$ gleiche oder verschiedene Alkylreste mit 1 bis 20 Kohlenstoffatomen und n = 1 bis 3 bedeuten, einer thermischen Behandlung unterworfen wurde, bis keine Alkylchloridabspaltung mehr erfolgte, und danach der Feststoff durch mehrmaliges Waschen mit einem Kohlenwasserstoff von löslichen Reaktionsprodukten befreit wurde.

3. Verfahren zur Herstellung eines Polymerisationskatalysators, der aus einer magnesium- und titanhaltigen Komponente (Komponente A) und einer metallorganischen Verbindung der Gruppe I bis III des Periodensystems (Komponente B) besteht, dadurch gekennzeichnet, daß man zur Herstellung der Komponente A in einer ersten Reaktionsstufe ein Magnesiumalkoholat mit Titantetrachlorid in einem Kohlenwasserstoff bei einer Temperatur von 50 bis 100°C umsetzt, anschließend die löslichen Bestandteile durch Waschen mit einem Kohlenwasserstoff abtrennt, den erhaltenen Feststoff in einem Kohlenwasserstoff suspendiert und in einer zweiten Reaktionsstufe bei einer Temperatur von 110 bis 200°C unter Zusatz eines Chloralkoxytitanates der Formel $TiCl_n(OR^1)_{4-n}$, worin $R^1$ gleiche oder verschiedene Alkylreste mit 1 bis 20 Kohlenstoffatomen und n = 1 bis 3 bedeuten, einer thermischen Behandlung unterwirft, bis keine Alkylchloridabspaltung mehr erfolgt und danach den Feststoff durch mehrmaliges Waschen mit einem Kohlenwasserstoff von löslichen Reaktionsprodukten befreit.

4. Verwendung des nach Anspruch 3 hergestellten Polymerisationskatalysators zur Polymerisation von 1-Olefinen der Formel $R^4CH = CH_2$, in der $R^4$ Wasserstoff oder einen Alkylrest mit 1 bis 10 Kohlenstoffatomen bedeuten.

**Claims**

1. A process for the polymerisation of 1-olefins of the formula $R^4 - CH = CH_2$ in which $R^4$ denotes hydrogen or an alkyl radical having 1 to 10 carbon atoms, in the presence of a catalyst composed of a component which contains magnesium and titanium (component A) and an organometallic compound of the groups I to III of the periodic system (component B), which comprises carrying out the polymerization of the presence of a catalyst in which the component A has been prepared by a procedure in which, in a first reaction stage, a magnesium alcoholate is reacted with titanium tetrachloride in a hydrocarbon at a temperature of 50 to 100°C, the soluble constituents are then removed by washing with a hydrocarbon and is subjected, in a second reaction stage, with the addition of a chloroalkoxytitanate, to a heat treatment at a temperature of 110 to 200°C, until no further alkyl chloride is split off, and the solid is then freed from soluble reaction products by washing several times with a hydrocarbon.

2. The process as claimed in claim 1, wherein the component A is prepared in a first reaction stage by reacting a magnesium alcoholate with titanium tetrachloride in a hydrocarbon at a temperature of 50 to 100°C, then removing the soluble constituents by washing with a hydrocarbon, and suspending the resulting solid in a hydrocarbon and subjecting it, in a second reaction stage, with the addition of a chloroalkoxytitanate of the formula $TiCl_n(OR^1)_{4-n}$, in which $R^1$ denotes identical or different alkyl radicals having 1 to 20 carbon atoms and n denotes 1 to 3, to a heat treatment at a temperature of 110 to 200°C until no further alkyl chloride is split off, and then freeing the solid from soluble reaction products by washing it several times with a hydrocarbon.

3. A process for the preparation of a polymerization catalyst composed of a component which contains magnesium and titanium (component A) and a organometallic compound of groups I to III of the periodic system (component B), which comprises preparing the component A in a first reaction stage by reacting a magnesium alcoholate with titanium tetrachloride in a hydrocarbon at a temperature of 50 to 100°C, then removing the soluble constituents by washing with a hydrocarbon, and suspending the resulting solid in a hydrocarbon and subjecting it, in a second reaction stage, with the addition of a chloroalkoxytitanate of the formula $TiCl_n(OR^1)_{4-n}$ in which $R^1$ denotes identical or different alkyl radicals having 1 to 20 carbon atoms and n denotes 1 to 3, to a heat treatment at a temperature of 110 to 200°C until no further alkyl chloride is split off, and then freeing the solid from soluble reaction products by washing it several times with a hydrocarbon.

4. Use of the polymerization catalyst prepared as claimed in claim 3 for the polymerization of 1-olefins of the formula $R^4CH = CH_2$ in which $R^4$ denotes hydrogen of an alkyl radical having 1 to 10 carbon atoms.

**Revendications**

1. Procédé de polymérisation d'$\alpha$-oléfines répondant à la formule $R^4 - CH = CH_2$, dans laquelle $R^4$ désigne l'hydrogène ou un radical alkyle en $C_1$ à $C_{10}$, en présence d'un catalyseur qui se compose d'un constituant contenant du magnésium et du titane (constituant A) et d'un composé organométallique des groupes I à III de la Classification Périodique (constituant B), caractérisé en ce qu'on polymérise en présence d'un catalyseur dont le constituant A a été préparé en faisant réagir dans un premier stade de réaction un alcoolate de magnésium avec du tétrachlorure de titane dans un hydrocarbure à une température de 50 à 100°C, puis en ce qu'on sépare les constituants solubles par lavage dans un hydrocarbure, en ce qu'on met en suspension la substance solide obtenue dans un hydrocarbure et en ce que dans un deuxième stade de réaction, on la soumet à un traitement thermique à une température de 110 à 200°C avec addition d'un chloralcoxytitanate, jusqu'à ce qu'il ne se produise plus de dégagement de chlorure d'alkyle, puis en ce qu'on débarrasse la substance solide, en la lavant plusieurs fois avec un hydrocarbure, des produits solubles de la réaction.

2. Procédé suivant la revendication 1, caractérisé en ce que pour la préparation du constituant A dans un premier stade de réaction on fait réagir un alcoolate de magnésium avec du tétrachlorure de titane dans un hydrocarbure à une température de 50 à 100°C, puis on sépare les constituants solubles par lavage avec un hydrocarbure, on met en suspension la substance solide obtenue dans un hydrocarbure et dans un deuxième stade de réaction, on la soumet à un traitement thermique à une température de 110 à 200°C avec addition d'un chloralcoxytitanate répondant à la formule:

$$TiCl_n(OR^1)_{4-n}$$

dans laquelle $R^1$ désigne des radicaux alkyles en $C_1$ à $C_{20}$ identiques ou différents et n est un nombre de 1 à 3, jusqu'à ce qu'il ne se produise plus de dégagement de chlorure d'alkyle, puis en ce qu'on débarrasse la substance solide, en la lavant plusieurs fois avec un hydrocarbure, des produits solubles de la réaction.

3. Procédé de préparation d'un catalyseur de polymérisation qui se compose d'un constituant contenant du magnésium et du titane (constituant A) et d'un composé organométallique des groupes I à III de la Classification périodique (constituant B), caractérisé en ce que pour la préparation du constituant A, on fait réagir dans un premier stade de réaction un alcoolate de magnésium avec du tétrachlorure de titane dans un hydrocarbure à une température de 50 à 100°C, puis en ce qu'on sépare les constituants solubles par lavage avec un hydrocarbure, en ce qu'on met en suspension la substance solide obtenue dans un hydrocarbure, et en ce que dans un deuxième stade de réaction, on la soumet à un traitement thermique à une température de 110 à 200°C avec addition d'un chloralcoxytitanate répondant à la formule:

$$TiCl_n(OR^1)_{4-n}$$

dans laquelle $R^1$ désigne des radicaux alkyles en $C_1$ à $C_{20}$ identiques ou différents et n est un nombre de 1 à 3, jusqu'à ce qu'il ne se produise plus de dégagement de chlorure d'alkyle, puis en ce qu'on débarrasse la substance solide, en la lavant plusieurs fois avec un hydrocarbure, des produits solubles de la réaction.

4. Utilisation du cytalyseur de polymérisation préparé suivant la revendication 3 pour la polymérisation d'$\alpha$-oléfines répondant à la formule $R^4CH = CH_2$, dans laquelle $R^4$ désigne l'hydrogène ou un radical alkyle en $C_1$ à $C_{10}$.